# EUROPEAN PATENT APPLICATION

(11) **EP 4 280 136 A1**
(43) Date of publication of application: **22.11.2023**
(21) Application number: 22173896.6
(22) Date of filing: 17.05.2022
(51) Int. Cl.: G06Q 10/08, G06Q 50/28, G06Q 50/06

(54) **MANAGING ENERGY FLOW AND FREIGHT TRANSPORTATION WITHIN A SYSTEM**

(71) Applicant: Einride AB, 111 56 Stockholm (SE)
(72) Inventor: ARNÄS, Per Olof, Stockholm (SE); FALCK, Robert, Stockholm (SE); HALLGREN, Per, Stockholm (SE); FUTTER, Christoph, Stockholm (SE); OHLSON, Tomas, Stockholm (SE); ISAKSSON, Daniel, Stockholm (SE); DAWOD, Dawid, Stockholm (SE)
(74) Representative: Laine IP Oy

(57) **Abstract**

According to an example aspect of the present invention, there is provided a method of managing energy flow and freight transportation within a system. The system can include a plurality of mobile electric assets (1). The mobile electic assets (1) can be self-propelled vehicles, non-self-propelled vehicles and non-vehicle electric assets. The management includes treating energy flow as a new dimension of a freight transportation system.

## Description

### FIELD

The present invention relates to a method of managing energy flow and freight transportation within a system including a plurality of mobile electric assets.

Further, the present invention relates to a system of managing energy flow and freight transportation within a system including a plurality of mobile electric assets.

### BACKGROUND

In the past decades freight has been typically transported via road networks utilizing in most instances vehicles having internal combustion engines. However, consumption of petroleum based energy is considered problematic for the environment and reduction of CO2 emissions has become a major concern within different industries.

With the development of electric vehicles, also freight transport assignments utilizing electric vehicles have become more common. However, electric vehicles carrying out such freight transport assignments have a significantly shorter range than vehicles having internal combustion engines. Additionally, re-charging times for charging of electric vehicles are significantly higher than re-fuelling times for re-fuelling of vehicles having internal combustion engines.

With the rapid pace of technological advancements being made in the area of computer science, remotely operated or autonomous vehicles may further very well soon become a reality and thereby change automotive and transport industry as we see it today.

Simply exchanging vehicles having internal combustion engines for electric vehicles in a freight ecosystem, but planning shipments in the same old way, will not work due to the significantly shorter range and significantly higher re-charge times. Additionally, degradation of batteries of electric vehicles over time is a major concern in operation and management of electric vehicles carrying out freight transport assignments.

### SUMMARY OF THE INVENTION

The invention is defined by the features of the independent claims. Some specific embodiments are defined in the dependent claims.

According to a first aspect of the present invention, there is provided a method of managing energy flow and freight transportation within a system including a plurality of mobile electric assets, said method comprising:
▪ Receiving mobile electric asset information including a geographic position and a battery status of a plurality of mobile electric assets each having at least one mobile electric asset battery pack, wherein the mobile electric assets include both self-propelled vehicle assets and non-self-propelled vehicle assets, and wherein electricity can be transferred directly between the self-propelled vehicle assets and non-self-propelled vehicle assets,
▪ Receiving a plurality of freight transport assignments including at least the following criteria for each: a pick-up point, a pick-up time, a drop-off point, a drop-off time and a weight and/or volume,
▪ Determining an electric energy requirement for fulfilling each received freight transport assignment,
▪ Determining a set of mobile electric assets, route assignments and charging assignments for those mobile electric assets which meet both the determined electric energy requirement and the criteria of the received freight transport assignment, and
▪ Sending route assignments and charging assignments for the determined set of mobile electric assets for fulfilling the freight transport assignments.

According to a second aspect of the present invention, there is provided a system of managing energy flow and freight transportation within a system including a plurality of mobile electric assets, the system comprising a control unit configured to:
▪ Receive mobile electric asset information including a geographic position and a battery status of a plurality of mobile electric assets each having at least one mobile electric asset battery pack, wherein the mobile electric assets include both self-propelled vehicle assets and non-self-propelled vehicle assets, and wherein electricity can be transferred directly between the self-propelled vehicle assets and non-self-propelled vehicle assets,
▪ Receive a plurality of freight transport assignments including at least the following criteria for each: a pick-up point, a pick-up time, a drop-off point, a drop-off time and a weight and/or volume,
▪ Determine an electric energy requirement for fulfilling each received freight transport assignment,
▪ Determine a set of mobile electric assets, route assignments and charging assignments for those mobile electric assets which meet both the determined electric energy requirement and the criteria of the received freight transport assignment, and
▪ Send route assignments and charging assignments for the determined set of mobile electric assets for fulfilling the freight transport assignments.

Considerable advantages are obtained by certain embodiments of the invention. A method and system of managing energy flow and freight transportation within a system including a plurality of mobile electric assets are provided. The present invention can improve efficiency of transportation of freight in an eco-system utilizing self-propelled electric vehicle assets. A plurality of non-self-propelled vehicle assets and non-vehicle assets can be distributed along a road network. A non-self-propelled vehicle asset and/or a non-vehicle asset may be positioned at a geographic start point, a geographic end point or a geographic intermediate point of a transport assignment. Self-propelled vehicle assets carrying out transport assignments can e.g. transport at least one non-self-propelled vehicle asset to another geographic position in order to provide electricity to a more optimum geographic position within the eco-system. Self-propelled vehicle assets carrying out transport assignments can also transport a non-self-propelled vehicle asset and/or a non-vehicle asset to another geographic position and transfer electricity between the self-propelled vehicle asset and the non-self-propelled vehicle asset during driving or standstill.

A route assignment for a freight transport assignment may be sub-optimal for the freight, for example the assigned geographic road route is not the shortest route between a geographic start point and a geographic end point, but an optimal route for the eco-system to enable charging of the self-propelled vehicle asset and/or positioning of non-self-propelled vehicle assets and/or non-vehicle assets to a more optimal place in the system. Mobile electric assets may be taken to or left at charging points for loading charge into the eco-system when it may not be explicitly necessary for freight being hauled. Electric energy can be freely transferred between self-propelled vehicle assets, non-self-propelled vehicle assets and non-vehicle assets independent of stationary charging infrastructure. The mobile electric assets represent a dynamic energy source within the eco-system and can be seen as a virtual power plant and battery loads are an additional dimension of route planning. Mobile electric assets can be, for example, charged where electric energy from renewable energy sources is available and then discharged where there are non-renewable energy sources, thus reducing CO2 emissions.

A transport route selection is optimized for increasing battery utilization efficiency and battery pack lifetime in a vehicle fleet comprising self-propelled vehicle assets. The battery life of a mobile electric asset can be significantly increased, for example 3 to 10 times, by effectively managing charging and discharging of mobile electric asset battery packs. A road route and a self-propelled vehicle asset are assigned to each freight transport assignment based on several factors which can be optimized not to only ensure time efficiency but also to optimize battery performance and accordingly increase the life expectancy of battery packs, thereby reducing maintenance and the overall costs for the vehicle fleet.

Further, when knowing a battery capacity and/or its degradation, i.e. state of health, it is possible to assign freight transport assignments to sets of mobile electric assets with worse batteries to routes which require less energy to keep such sets of mobile electric assets useful in the overall eco-system even when they may not be useful on their own outside the eco-system.

Additionally, for an entire fleet of self-propelled vehicle assets to be utilized at good energy and costs efficiency, one must take into account several parameters when suggesting or assigning routes between geographic start points and geographic end points. By recent technological advancements in terms of electric vehicles, processing power, sensing technology, communication technology, etc., it is possible to build a system which can gather the necessary data and designate various assignments to the most suited set of mobile electric assets and operate a whole fleet of self-propelled vehicle assets at a better energy and operational efficiency utilizing the plurality of mobile electric assets. Energy consumption considerations can be moved from a vehicle level to vehicle fleet management level. A digital twin of each self-propelled vehicle asset and each non-self-propelled vehicle asset can be further created to monitor transport assignments.

For example, in a situation where two or more self-propelled vehicle assets are eligible to perform a transport assignment in terms of that both are capable to perform the task within a predefined time frame, the system may be configured to select the geographic road route and self-propelled vehicle asset which will execute the assignment based on other criteria, for example based on electric energy required for carrying out another transport assignment. In other words, the electric energy provided by a plurality of mobile electric assets along a road network is further taken into consideration when assigning a transport assignment to a set of mobile electric assets. Energy and freight are thus treated within the eco-system as connectable, but independent.

Some mobile electric assets may be in the form of pallet-sized or sub-pallet-sized units. In other words, swappable units are provided which can be e.g. packed within an electric truck, trailer or container. Empty space within a cargo hold can therefore be used for easily moving electric energy within the eco-system. Such units can be connected to another mobile electric asset or transported unconnected to be used at another geographic position.

Electric energy provided by a mobile electric asset can also be used as a power source for other tasks than transportation of freight, for example for loading and unloading of freight when parked. This can be used for empty legs from a freight perspective but can be a utilized leg from an energy perspective.

Inductive charging can take place at a parking spot, for example non-self-propelled vehicle assets in the form of trailers can be charged.

As regenerative braking can only be used when a battery is not fully charged, electricity may be transferred within a set of mobile electric assets comprising a self-propelled vehicle asset and a non-self-propelled vehicle asset in order to make room for new energy.

Geographic route parameters such as altitude changes, breaks, etc. can be utilized for optimization.

The present systems and methods can provide treating energy flow in a system including electric assets as a new dimension in addition to earlier dimensions such as freight, drivers and regulatory concerns.

### BRIEF DESCRIPTION OF THE DRAWINGS

FIGURE 1 illustrates a schematic drawing of an example of a mobile electric asset utilized in accordance with at least some embodiments of the present invention,
FIGURE 2 illustrates a schematic drawing of an example of another mobile electric asset utilized in accordance with at least some embodiments of the present invention,
FIGURE 3 illustrates a schematic drawing of an example of a further mobile electric asset utilized in accordance with at least some embodiments of the present invention,
FIGURE 4 illustrates a schematic drawing of an example of a yet further mobile electric asset utilized in accordance with at least some embodiments of the present invention,
FIGURE 5 illustrates a schematic drawing of a road network for the purpose of describing at least some embodiments of the present invention,

### EMBODIMENTS

In this document, the term "road network" is being used. The term "road network" means a plurality of roads, wherein at least some of the roads are interconnected with each other so that vehicles can each move from one geographic start point to a geographic end point. The roads can be public roads and/or private roads. A road network can further comprise areas connected to at least one of the roads and accessible for vehicles from one of the roads, for example a parking lot, a gas station, a distribution centre for freight, or a privately owned company area. A road network can also comprise infrastructure such as an airport, a harbour or a train station. A road network can, for example, comprise a plurality of roads within a country or a city. In some cases, infrastructure such as an airport or a harbour can have its own road network, for instance. It should be considered that the term "road network" can be a completely private and/or fenced area which does not normally resemble a road or a network but which is an area where a set of vehicles can operate between multiple points, for example a harbour or warehouse complex.

In this document, the term "mobile electric asset" is being used. The term "mobile electric asset" means a movable object comprising at least one mobile electric asset battery pack. Mobile electric assets can be non-self-propelled or self-propelled. Examples of mobile electric assets are non-self-propelled vehicle assets such as a trailer. Additionally mobile electric assets can be non-vehicle assets such as a pallet-sized or sub-pallet-sized unit, a container or an array of mobile electric asset battery packs. Other examples of mobile electric assets are self-propelled vehicle assets such as electric vehicles, electric trucks, electric tractors, pods, etc. Self-propelled vehicle assets mentioned within this document can have an own cargo hold or a platform for transportation of freight. Such self-propelled vehicle assets having an own cargo hold or a platform for transportation of freight are defined as trucks within this document. Trucks may be further configured to be mechanically coupled to a trailer. Trailers may be self-propelled or non-self-propelled. Other self-propelled vehicle assets mentioned in this documents are not equipped with an own cargo hold or a platform for transportation of freight, but are configured to be mechanically coupled to a trailer. Such self-propelled vehicle assets without an own cargo hold or platform for transportation of freight are defined as tractors or pods within this document. Self-propelled vehicle assets mentioned within this documents can be configured to be electrically connected to a non-self propelled vehicle asset and/or a non-vehicle asset.

In this document, the term "vehicle fleet" is being used. A vehicle fleet is in the present context to be understood as two or more vehicles.

In this document, the term "a transmitter" for transmitting data and the term "a receiver" for receiving data are being used. The transmitter and the receiver may be configured to transmit and receive, respectively, information in accordance with at least one communication standard. The transmitter may comprise more than one transmitter. The receiver may comprise more than one receiver. The transmitter and/or the receiver may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example. The receiver may be configured to receive signals from an external positioning system, for example a GPS satellite signal.

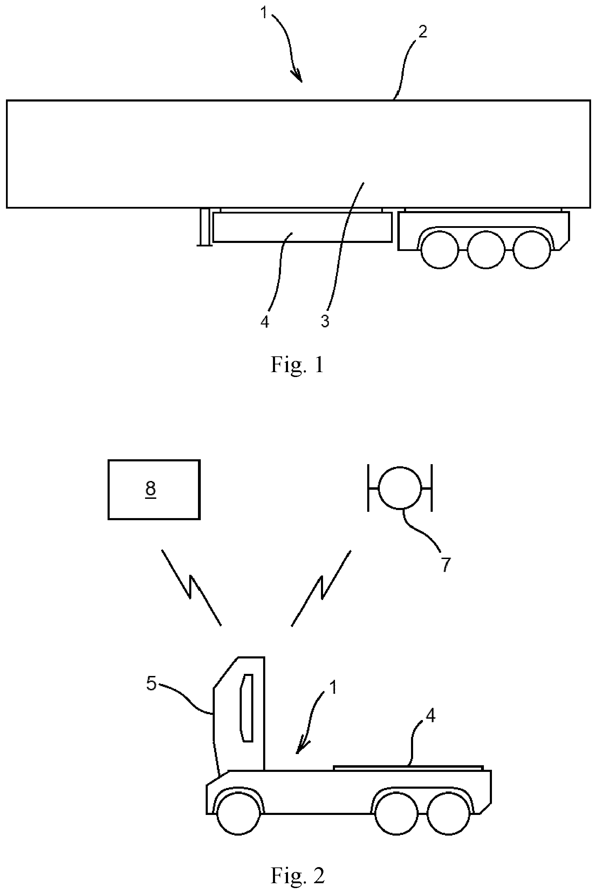

In FIGURE 1 a schematic drawing of an example of a mobile electric asset 1 utilized in accordance with at least some embodiments of the present invention is illustrated. The shown mobile electric asset 1 is a non-self-propelled vehicle asset in the form of a trailer 2 comprising a cargo hold 3 for transportation of freight. The mobile electric asset 1 comprises at least one mobile electric asset battery pack 4. For example, two external mobile electric asset battery packs 4 may be arranged below the cargo hold 3 of the trailer 2. The mobile electric asset battery packs 4 can be removably coupled to the trailer 2 for providing the possibility to replace the battery packs 4. Axels of the trailer 2 can be connected to an electric motor or can be free as in a normal trailer utilized in connection with vehicles having an internal combustion engine.

The trailer 2 can optionally comprise a receiver configured to wirelessly receive a signal about the geographic position of the trailer from an external positioning system, for example from a GPS system. Additionally, the trailer 2 can optionally comprise a transmitter for wirelessly transmitting mobile electric asset information to an external system of managing energy flow and freight transportation within a system including a plurality of mobile electric assets. The mobile electric asset information comprises the geographic position of the trailer 2 as well as status information about the trailer 2. The mobile electric asset status information comprises a state of charge for each mobile electric asset battery pack 4 of the trailer 2. The mobile electric asset status information can further comprise information about the capacity and/or state of health of each of the mobile electric asset battery packs 4 of the trailer 2.

Each battery pack 4 of the trailer 2 can comprise an indicator indicating the state of charge of the battery pack 4. The indicator may be visible from the outside for providing the possibility to quickly inspect the state of charge. Each battery pack 4 of the trailer 2 can also comprise a NFC port or tag. Information may be thus retrieved about an authenticated trailer in the management platform. Security and authentication of the trailer, its load, state of charge of the battery packs, etc. can be managed from the system and easily checked by drivers or authorities such as customs or police.

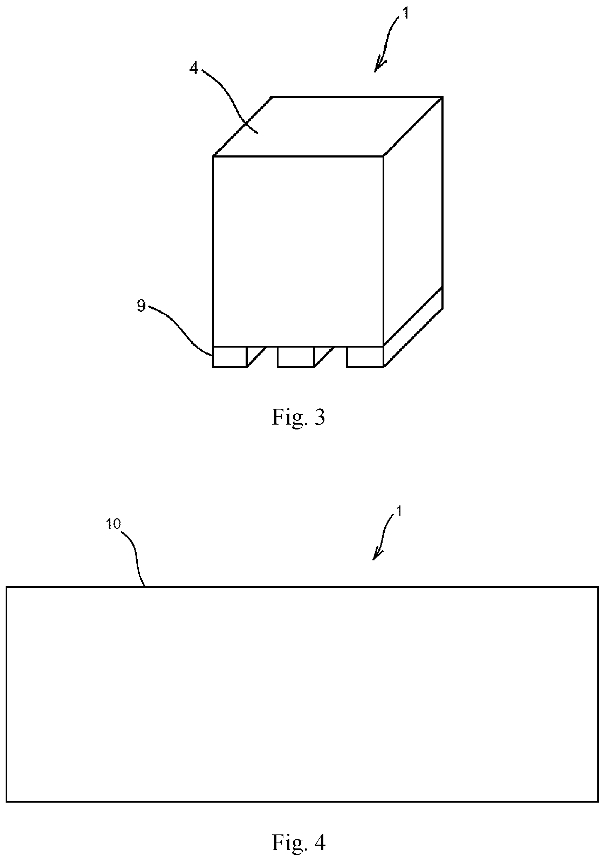

The trailer 2 is configured to be electrically connected to a self-propelled vehicle asset. An example of a self-propelled vehicle asset is shown in FIGURE 2. The trailer 2 may be further configured to be electrically connected to a non-vehicle asset, for example to a unit 9 as shown in FIGURE 3 or a container 10 as shown in FIGURE 4.

In FIGURE 2 a schematic drawing of an example of another mobile electric asset 1 utilized in accordance with at least some embodiments of the present invention is illustrated. The shown mobile electric asset is a self-propelled vehicle asset 5 in the form of a so-called tractor or pod. The self-propelled vehicle asset 5 is configured to be mechanically coupled to a trailer, for example to the trailer 2 as shown in FIGURE 1. The shown self-propelled vehicle asset 5 does not comprise an own cargo hold or platform for transportation of freight. The shown self-propelled vehicle asset 5 can be an autonomous electric vehicle, a remotely operated electric vehicle, or an electric vehicle operated by a driver. Another example of a self-propelled vehicle asset 5 can be an electric truck comprising an own cargo hold or platform for transportation of freight. A trailer 2 can be typically, but not necessarily, mechanically coupled to an electric truck utilized in accordance with at least some embodiments of the present invention. A self-propelled vehicle asset 5 comprises at least one mobile electric asset battery pack 4. The at least one mobile electric asset battery pack 4 can be removably coupled to the self-propelled vehicle asset 5 for providing the possibility to replace the at least one mobile electric asset battery pack 4.

Such self-propelled vehicle assets 5 can be configured to be electrically connected to a non-self-propelled vehicle asset such as a trailer 2 as shown in FIGURE 1, a non-vehicle asset such as a unit 9 as shown in FIGURE 3 or a non-vehicle asset such as a container 10 as shown in FIGURE 4, for example for providing additional battery load. Electricity may be transferred directly from a self-propelled vehicle asset 5 to a non-self-propelled vehicle asset and vice versa, if required. Electricity may be transferred directly from a self-propelled vehicle asset 5 to a non-vehicle asset and vice versa, if required.

The self-propelled vehicle asset 5 comprises a receiver configured to wirelessly receive a signal about the geographic position of the self-propelled vehicle asset 5 from an external positioning system 7, for example from a GPS system. Additionally, the self-propelled vehicle asset 5 comprises a transmitter for wirelessly transmitting mobile electric asset information to an external system 8 of managing energy flow and freight transportation within a system including a plurality of mobile electric assets 1. The mobile electric asset information comprises the geographic position of the self-propelled vehicle asset 5 as well as status information about the self-propelled vehicle asset 5. The self-propelled vehicle asset status information comprises a state of charge for each mobile electric asset battery pack 4 of the self-propelled vehicle asset 5. The self-propelled vehicle asset status information can further comprise information about the capacity and/or state of health of each of the mobile electric asset battery packs 4 of the self-propelled vehicle asset 5.

The transmitter of the self-propelled vehicle asset 5 may also be useful for wirelessly transmitting mobile electric asset information to an external system 8 of managing energy flow and freight transportation within a system including a plurality of mobile electric assets 1. Mobile electric asset information from a non-self-propelled vehicle asset may be received by the self-propelled vehicle asset 5 and transmitted to the external system 8 of managing energy flow and freight transportation within a system including a plurality of mobile electric assets 1 in real time, for example during transport of the respective non-self-propelled vehicle asset.

In some cases, a non-self-propelled vehicle asset or non-vehicle assets might not be equipped with a receiver configured to wirelessly receive a signal about the geographic position of the respective mobile electric asset from an external positioning system 7 and a transmitter for wirelessly transmitting mobile electric asset information to the system 8 of managing energy flow and freight transportation within a system including a plurality of mobile electric assets 1. In such cases, the mobile electric asset information from the non-self-propelled vehicle asset or non-vehicle asset may be transmitted by the self-propelled vehicle asset 5 to the external system 8 of managing energy flow and freight transportation within a system including a plurality of mobile electric assets 1, for example in connection with pick-up and/or drop-off of the respective non-self-propelled vehicle asset or non-vehicle asset. The respective mobile electric asset information from the non-self-propelled vehicle asset or non-vehicle asset is then stored in a database comprised by the external system 8 of managing energy flow and freight transportation within a system including a plurality of mobile electric assets 1.

In FIGURE 3 a schematic drawing of an example of a further mobile electric asset 1 utilized in accordance with at least some embodiments of the present invention is illustrated. The shown mobile electric asset 1 is a non-vehicle asset in the form of a pallet-sized or a sub-pallet-sized unit 9. The mobile electric asset 1 comprises at least one mobile electric asset battery pack 4. Such units 9 can be easily transported, for example within a cargo hold 3 of a trailer 2 as shown in FIGURE 1, to another geographic position where electricity or battery load is required. Pallet-sized or a sub-pallet-sized units 9 are particularly beneficial, as they can be handled with standard cargo handling equipment. Further, one or more of such units 9 can be easily transported within a cargo hold 3 of a truck or trailer 2, for example when there is sufficient space available within the cargo hold 3 during carrying out a transport assignment. Such units 9 can be further configured to be electrically connected to another mobile electric asset 1 such as a trailer 2 as shown in FIGURE 1, for example for providing additional electricity or battery load. Electricity may be transferred from a unit 9 to another mobile electric asset 1 and vice versa, if required. Such units 9 can be further configured to be electrically connected to a self-propelled vehicle asset 5, for example for charging during standstill of the respective self-propelled vehicle asset 5. Electricity may be transferred from a unit 9 to a self-propelled vehicle asset 5 and vice versa, if required.

Each unit 9 can optionally comprise a receiver configured to wirelessly receive a signal about the geographic position of the unit 9 from an external positioning system 7, for example from a GPS system. Additionally, each unit 9 can optionally comprise a transmitter for wirelessly transmitting mobile electric asset information to an external system of managing energy flow and freight transportation within a system including a plurality of mobile electric assets 8. The mobile electric asset information comprises the geographic position of the unit 9 as well as status information about the unit 9. The mobile electric asset status information comprises a state of charge for each mobile electric asset battery pack 4 of the unit 9. The mobile electric asset status information can further comprise information about the capacity and/or state of health of each of the at least one mobile electric asset battery pack 4 of the unit 9.

A footprint of a pallet-sized unit 9 can be 600 x 400 mm, 800 x 600 mm, 1200 x 800 mm, 1200 x 1000 mm, 1000 x 1000 mm, 1140 x 1140 mm, 1200 x 1200 mm, 1300 x 1200 mm, for instance.

In FIGURE 4 an example of a yet further mobile electric asset utilized in accordance with at least some embodiments of the present invention is illustrated. The shown mobile electric asset 1 is a non-vehicle asset in the form of a container 10. Such containers 10 can be easily transported, for example utilizing a trailer, to another geographic position where electricity is required. Such containers 10 can also be temporarily positioned along a road network. It is known that electric battery packs comprised by mobile electric assets 1 degrade over time. In other words, the health of an electric battery pack reduces over time. Mobile electric asset battery packs 4 that have degraded beyond a useful level can be, for example, stored within such containers 10. Of course, also at least one other mobile electric asset 1, for example a unit 9, having at least one mobile electric asset battery pack 4 can be stored within such containers 10. The containers 10 can then be used as battery banks along the road network for charging self-propelled vehicle assets 5 and/or non-self propelled vehicle assets.

The shown container 10 is configured to be electrically connected to another mobile electric asset 1 such as a trailer 2 as shown in FIGURE 1 or a unit 9 as shown in FIGURE 3 and/or to a self-propelled vehicle asset 5 such as shown in FIGURE 2. Electricity may be transferred from a container 10 to another mobile electric asset 1 and vice versa, if required.

Each container 10 can optionally comprise a receiver configured to wirelessly receive a signal about the geographic position of the container 10 from an external positioning system 7, for example from a GPS system. Additionally, each container 10 can optionally comprise a transmitter for wirelessly transmitting mobile electric asset information to an external system 8 of managing energy flow and freight transportation within a system including a plurality of mobile electric assets 1. The mobile electric asset information comprises the geographic position of the container 10 as well as status information about the container 10. The mobile electric asset status information comprises a state of charge for each mobile electric asset battery pack 4 of the container 10. The mobile electric asset status information can further comprise information about the capacity and/or state of health of each of the at least one mobile electric asset battery pack 4 of the container 10.

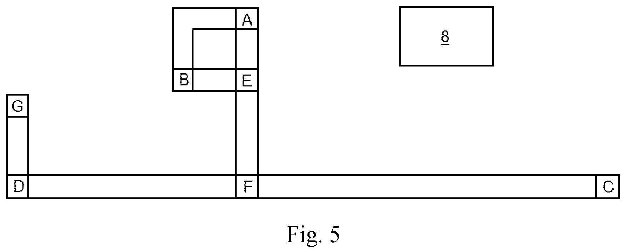

In FIGURE 5 a schematic drawing of a road network for the purpose of describing at least some embodiments of the present invention is illustrated. A fully charged first self-propelled vehicle asset in the form of a truck having a cargo hold is located at geographic position A, for example at a freight distribution centre. A first transport assignment comprising the criteria pick-up point, pick-up time, drop-off point, drop-off time as well as a weight and/or volume of the freight is received to transport freight from geographic start point A to geographic end point B, end point B being for example a privately owned company. A fully charged second self-propelled vehicle asset in the form of a truck having a cargo hold is further located at geographic position C, for example another privately owned company. A second transport assignment comprising the criteria pick-up point, pick-up time, drop-off point, drop-off time as well as a weight and/or volume of the freight is received to transport freight from geographic start point C to geographic end point D, end point D being for example another freight distribution centre. A third self-propelled vehicle asset in the form of a tractor without a cargo hold with almost empty battery packs is located at geographic position D. A third transport assignment comprising the criteria pick-up point, pick-up time, drop-off point, drop-off time as well as a weight and/or volume of the freight is received to transport freight from geographic start point D to geographic end point G, end point G being for example a harbour.

A fully charged first mobile electric asset in the form of a trailer is located at geographic position E and a plurality of partially charged second mobile electric assets in the form of pallet-sized units are located at geographic position F.

Mobile electric asset information is received by a system 8 for managing a plurality of mobile assets. Further, an electric energy requirement is determined for fulfilling each received transport assignment. Additionally, a set of mobile electric assets, route assignments and charging assignments for those mobile electric assets which meet both the determined electric energy requirement and the criteria of the received freight transport assignment are determined. Route assignments and charging assignments are then sent for the determined set of mobile electric assets for fulfilling the freight transport assignments.

For example, for each transport assignment route information about one or more than one geographic road route between the geographic start point and the geographic end point are received.

For the first transport assignment, a first received geographic road route for the first electric truck may be directly from A to B. A second geographic road route for the first electric truck may be from A to E to B and a third geographic road route may be from A to E to F to E to B. As the first electric truck is fully charged, the first electric truck can serve all possible geographic road routes from geographic start point A to geographic end point B without re-charging.

For the second transport assignment, there is only one possible geographic road route available between the geographic start point C and the geographic end point D. However, the distance between C and D is so long that the second electric truck needs to be re-charged between C and D.

For the third transport assignment, there is also only one possible geographic road route available between the geographic start point D and the geographic end point G. The battery packs of the third self-propelled vehicle asset in the form of an electric tractor are however almost empty and the distance between D and G is so long that the electric tractor needs to be re-charged between D and G.

In an eco-system with vehicles having internal combustion systems the first transport assignment would be carried out by directly transporting the freight directly from A to B, the second transport assignment would be carried out by directly transporting the freight from C to D with petroleum resources based re-fuelling at gas station F and directly transporting the freight from D to G with petroleum resources based re-fuelling at D. However, in an electric vehicle eco-system such transportation of freight will not work, as it is not efficient to charge battery packs of electric vehicles for several hours utilizing a stationary electric network.

Therefore, for each transport assignment a geographic road route and charging assignments are sent for the determined set of mobile electric assets for carrying out the transport assignment. As described in the below example, for each transport assignment the assigned geographic road route intersects with the geographic position of at least one of non-self-propelled vehicle asset.

The fully charged first self-propelled vehicle asset in the form of an electric truck or the driver thereof is instructed to drive from geographic start point A to intermediate geographic position E, where the fully charged first non-self-propelled vehicle asset in the form of a trailer is mechanically coupled to the first self-propelled vehicle asset, thus forming a set of mobile electric assets. Subsequently, the first non-self-propelled vehicle asset in the form of a trailer is transported to geographic position F. The first non-self-propelled vehicle asset is then mechanically de-coupled from the first self-propelled vehicle asset at intermediate geographic position F. After this, the freight is delivered by the first self-propelled vehicle asset via E to geographic end point B. In other words, the first self-propelled vehicle asset has not taken the direct geographic road route from A to B, but instead the geographic road route A to E to F to E to B in order to transport a mobile electric asset from E to another geographic position F.

The fully charged second self-propelled vehicle asset in the form of an electric truck or the driver thereof is instructed to drive from geographic start point C to intermediate geographic position F. The battery charge of the second self-propelled vehicle asset is almost empty when arriving at F. Instead of charging the second self-propelled vehicle asset for several hours utilizing a stationary electric network, instructions are transmitted to mechanically and electrically couple the second self-propelled vehicle asset to the first non-self-propelled vehicle asset in the form of a trailer previously de-coupled from the first self-propelled vehicle asset at geographic position F, thus forming a set of mobile electric assets. Additionally, instructions are transmitted to the second self-propelled vehicle asset or the driver thereof to load a plurality of partially charged non-vehicle assets in the form of pallet-sized units into the empty cargo hold of the trailer. As a consequence, the second self-propelled vehicle asset is now able to continue delivering its freight from F to D without the need to re-charge at F for several hours utilizing a stationary electric network. Electricity from the fully charged first non-self-propelled vehicle asset in the form of the trailer carrying the plurality of second non-vehicle assets in the form of pallet-sized or sub-pallet-sized units can be transferred directly to the second self-propelled vehicle asset during driving. The second transport assignment can be therefore completed without substantial loss of delivery time between C and D.

The third self-propelled vehicle asset in the form of an electric tractor without an own cargo hold is located at geographic start point D. However, the driver of the third self-propelled vehicle asset is by law not allowed to continue delivery of freight without having a rest and the battery charge of the third self-propelled vehicle asset is further not sufficientl to immediately carry out the third transport assignment. The third self-propelled vehicle asset is therefore electrically connected to the partially charged plurality of second non-vehicle assets in the form of pallet-sized or sub-pallet-sized units, thus forming a set of mobile electric assets, previously delivered by the second self-propelled vehicle asset together with its freight to D. As a consequence, electricity can be transferred from the plurality of units to the third self-propelled vehicle asset during standstill of the third self-propelled vehicle asset. After the driver of the third self-propelled vehicle asset has had the rest required by law, the battery packs of the third self-propelled vehicle asset are sufficiently charged for freight delivery from geographic start point D to geographic start point G. Freight is further loaded into the trailer previously delivered by the second self-propelled vehicle asset in the form of an electric truck to D.

The third self-propelled vehicle asset or the driver thereof is instructed to transport the trailer with its freight to geographic position G. Additionally, instructions are transmitted to also transport the units to geographic position G, as electric energy from renewable energy sources is available at geographic position G. Upon arrival at geographic position G the third self-propelled vehicle asset, the trailer and the units can be fully charged utilizing the renewable energy sources. Subsequently, the mobile electric assets in the form of the trailer and the units can be, for example, re-located along the road network. The mobile electric assets in the form of the trailer and the units can be, for example, positioned at a geographic position where electric energy from renewable energy sources is not available. The mobile electric assets in the form of the trailer and the units can be transported by the third self-propelled vehicle asset to gas station F, for instance. As a consequence, mobile electric assets are available at gas station F for any further transport assignments. By means of distributing a plurality of non-self-propelled vehicle assets and non-vehicle assets along the road network a virtual cable can thus be provided for charging of self-propelled vehicle assets. Mobile electric assets can be charged where electric energy from renewable energy sources is available and later discharged far away.

An embodiment includes an arrangement comprising.
- an electric vehicle comprising at least one electric vehicle battery pack,
- a first mobile electric asset in the form of a trailer mechanically coupled to the electric vehicle and comprising at least one first mobile electric asset battery pack, wherein the at least one first mobile electric asset battery pack is configured to be electrically connected to the at least one electric vehicle battery pack, and
- a second mobile electric asset in the form of a separate transportable unit comprising at least one second mobile electric asset battery pack, wherein the at least one second mobile electric asset battery pack is configured to be electrically connected to the at least one first mobile electric asset battery pack,
- wherein the arrangement is configured to transfer electricity from at least one of the electric mobile assets to the electric vehicle or from the electric vehicle to at least one of the mobile electric assets. Arrangements can include wherein the trailer comprises a cargo hold for transportation of freight, and wherein the separate transportable unit is arranged within the cargo hold.

Arrangements can include wherein the trailer is capable of transporting a container, and wherein the separate transportable unit is arranged within the container.

Arrangements can include wherein freight is additionally arranged within the container.

Arrangements can include wherein the electric vehicle comprises a receiver for wirelessly receiving a signal from an external positioning system about a geographic position of the electric vehicle.

Arrangements can include wherein the first mobile electric asset comprises a receiver for wirelessly receiving a signal from an external positioning system about a geographic position of the first mobile electric asset.

Arrangements can include wherein the second mobile electric asset comprises a receiver for wirelessly receiving a signal from an external positioning system about a geographic position of the second mobile electric asset.

Arrangements can include wherein the electric vehicle comprises a transmitter for wirelessly transmitting information about a geographic position of the electric vehicle and electric vehicle status information comprising a state of charge of the at least one electric vehicle battery pack.

Arrangements can include wherein the first mobile electric asset comprises a transmitter for wirelessly transmitting information about a geographic position of the first mobile electric asset and mobile electric asset status information comprising a state of charge of the at least one first mobile electric asset battery pack.

Arrangements can include wherein the second mobile electric asset comprises a transmitter for wirelessly transmitting information about a geographic position of the second mobile electric asset and mobile electric asset status information comprising a state of charge of the at least one second mobile electric asset battery pack.

Arrangements can include wherein the separate transportable unit has pallet-sized or sub-pallet-sized dimensions.

Arrangements can include wherein a footprint of a pallet-sized separate transportable unit is 600 x 400 mm, 800 x 600 mm, 1200 x 800 mm, 1200 x 1000 mm, 1000 x 1000 mm, 1140 x 1140 mm, 1200 x 1200 mm, 1300 x 1200 mm.

Another embodiment includes a method of managing energy flow and freight transportation within a system including a plurality of mobile electric assets, the method comprising:
∘ receiving mobile electric asset information about a geographic position and a status of a plurality of mobile electric assets distributed along a road network, each mobile electric asset comprising at least one mobile electric asset battery pack, wherein the mobile electric asset status information comprises a state of charge for each mobile electric asset battery pack,
∘ receiving vehicle information about a geographic position and a status of a plurality of electric vehicles in a vehicle fleet, each electric vehicle comprising at least one electric vehicle battery pack, wherein the electric vehicle status information comprises a state of charge for each electric vehicle battery pack,
∘ receiving a plurality of transport assignments, wherein each transport assignment comprises a geographic start point and a geographic end point, a pick-up time and a drop-off time and a weight and/or volume of the freight,
∘ receiving for each transport assignment route information about at least one geographic road route between the geographic start point and the geographic end point,
∘ assigning for each transport assignment a geographic road route and an electric vehicle for carrying out the transport assignment based on the received mobile electric asset information and the received vehicle information, wherein for each transport assignment the assigned geographic road route intersects with the geographic position of at least one of the plurality of mobile electric assets, and
∘ transmitting instructions to each of the assigned electric vehicles or drivers thereof to perform at least one of:
   ∘ transporting at least one of the plurality of mobile electric assets to another geographic position,
   ∘ transporting at least one of the plurality of mobile electric assets to another geographic position and transferring during the transport electricity from the at least one transported electric mobile asset to the assigned electric vehicle or from the assigned electric vehicle to the at least one transported mobile electric asset, and
   ∘ transferring during standstill of the assigned electric vehicle at the geographic position of at least one of the plurality of mobile electric assets electricity from said at least one of the plurality of mobile electric assets to the assigned electric vehicle or from the assigned electric vehicle to said at least one of the plurality of mobile electric assets.

Methods can include wherein the mobile electric asset status information comprises information about the capacity and state of health of the at least one mobile electric asset battery pack.

Methods can include wherein the vehicle status information comprises information about the capacity or state of health of the at least one vehicle battery pack.

Methods can include wherein the method further comprises determining for each geographic road route between the geographic start point and the geographic end point information about expected power consumption for each transport assignment or an electric energy requirement for fulfilling each received transport assignment.

Methods can include wherein the method further comprises transmitting for each transport assignment information about the transport assignment, information about the geographic position of at least one of the plurality of mobile electric assets and information about the assigned geographic road route to the assigned electric vehicle or driver thereof.

Methods can include wherein the method further comprises transmitting instructions to a first electric vehicle assigned to a first transport assignment to transport at least one of the plurality of mobile electric assets from its geographic position to another geographic position that intersects with a geographic road route of a second electric vehicle assigned to a second transport assignment.

Methods can include wherein at least one of the plurality of mobile electric assets is a trailer, a container, a pallet-sized unit, or a sub-pallet-sized unit.

Methods can include wherein at least one of the plurality of electric vehicles is an autonomous electric vehicle, a remotely operated electric vehicle, an electric vehicle operated by a driver, an electric truck, an electric tractor or an electric pod.

Methods can include wherein the method further comprises
transmitting instructions to a vehicle having an internal combustion engine to transport at least one of the plurality of mobile electric assets to another geographic position that intersects with a geographic road route assigned to at least one of the plurality of electric vehicles.

Methods can include wherein renewable energy is used as an energy source for charging at least one of the plurality of electric mobile assets or at least one of the plurality of electric vehicles or a combination thereof.

Another embodiment is a system of managing energy flow and freight transportation within a system including a plurality of mobile electric assets, the system comprising a control unit configured to:
∘ receive mobile electric asset information about a geographic position and a status of a plurality of mobile electric assets distributed along a road network, each mobile electric asset comprising at least one mobile electric asset battery pack, wherein the mobile electric asset status information comprises a state of charge for each mobile electric asset battery pack,
∘ receive vehicle information about a geographic position and a status of a plurality of electric vehicles in a vehicle fleet, each electric vehicle comprising at least one electric vehicle battery pack, wherein the electric vehicle status information comprises a state of charge for each electric vehicle battery pack,
∘ receive a plurality of transport assignments, wherein each transport assignment comprises a geographic start point and a geographic end point, a pick-up time and a drop-off time and a weight and/or volume of the freight,
∘ receive for each transport assignment route information about at least one geographic road route between the geographic start point and the geographic end point,
∘ assign for each transport assignment a geographic road route and an electric vehicle for carrying out the transport assignment based on the received mobile electric asset information and the received vehicle information, wherein for each of the transport assignments the assigned geographic road route intersects with the geographic position of at least one of the plurality of mobile electric assets, and
∘ transmit instructions to each of the assigned electric vehicles or drivers thereof to perform at least one of:
   ∘ transporting at least one of the plurality of mobile electric assets to another geographic position,
   ∘ transporting at least one of the plurality of mobile electric assets to another geographic position and transferring during the transport electricity from the at least one transported electric mobile asset to the assigned electric vehicle or from the assigned electric vehicle to the at least one transported mobile electric asset, and
   ∘ transferring during standstill of the assigned electric vehicle at the geographic position of at least one of the plurality of mobile electric assets electricity from said at least one of the plurality of mobile electric assets to the assigned electric vehicle or from the assigned electric vehicle to said at least one of the plurality of mobile electric assets.

Systems can include wherein the control unit is further configured to transmit for each transport assignment information about the transport assignment, information about the geographic position of at least one of the plurality of mobile electric assets and information about the assigned geographic road route to the assigned electric vehicle.

Systems can include further comprising a database comprising the geographic road route information.

Systems can include a processor comprised by the control unit.

Systems can include a memory comprised by the control unit.

Systems can include a transmitter and a receiver for sending and receiving data, respectively.

It is to be understood that the embodiments of the invention disclosed are not limited to the particular structures, process steps, or materials disclosed herein, but are extended to equivalents thereof as would be recognized by those ordinarily skill in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in transport assignment of electric vehicles in a vehicle fleet.

### ACRONYMS LIST

- GPS: global positioning system
- NFC: near-field communication

### REFERENCE SIGNS LIST

- 1: mobile electric asset
- 2: trailer
- 3: cargo hold
- 4: mobile electric asset battery pack
- 5: self-propelled vehicle asset
- 7: external positioning system
- 8: system for managing a plurality of mobile assets
- 9: unit
- 10: container

## Claims

1. A method of managing energy flow and freight transportation within a system including a plurality of mobile electric assets (1), said method comprising:
▪ Receiving mobile electric asset information including a geographic position and a battery status of a plurality of mobile electric assets (1) each having at least one mobile electric asset battery pack (4), wherein the mobile electric assets (1) include both self-propelled vehicle assets (5) and non-self-propelled vehicle assets, and wherein electricity can be transferred directly between the self-propelled vehicle assets (5) and non-self-propelled vehicle assets,
▪ Receiving a plurality of freight transport assignments including at least the following criteria for each: a pick-up point, a pick-up time, a drop-off point, a drop-off time and a weight and/or volume,
▪ Determining an electric energy requirement for fulfilling each received freight transport assignment,
▪ Determining a set of mobile electric assets (1), route assignments and charging assignments for those mobile electric assets (1) which meet both the determined electric energy requirement and the criteria of the received freight transport assignment, and
▪ Sending route assignments and charging assignments for the determined set of mobile electric assets (1) for fulfilling the freight transport assignments.

2. The method according to claim 1, wherein the mobile electric asset information comprises information about the capacity and/or state of health of each mobile electric asset battery pack (4).

3. The method according to claim 1 or 2, wherein the method further comprises sending for each freight transport assignment information about the freight transport assignment, information about the geographic position of at least one non-self-propelled vehicle asset, information about the route assignment and information about the charging assignment.

4. The method according to any one of claims 1 - 3, wherein at least one of the non-self-propelled vehicle assets is a trailer, and/or wherein the mobile electric assets further include non-vehicle assets including a container, a pallet-sized unit, a sub-pallet-sized unit or an array of mobile electric asset battery packs.

5. The method according to any one of claims 1 - 4, wherein at least one of the self-propelled vehicle assets is an autonomous electric vehicle, a remotely operated electric vehicle, an electric vehicle operated by a driver, an electric truck, an electric tractor or an electric pod.

6. The method according to any one of claims 1 - 5, wherein mobile electric asset information is received in real time.

7. The method according to any one of claims 1 - 6, wherein the non-self-propelled vehicle assets are trailers carrying the freight or stationary non-self-propelled vehicle assets.

8. The method according to any one of claims 1 - 7, wherein the electric energy requirement is a minimum electric energy requirement.

9. The method according to any one of claims 1 - 8, wherein the charging assignments include charging of the mobile electric assets (1) at stationary charging points and/or between self-propelled vehicle assets (5) and non-self-propelled vehicle assets during driving on a route assignment.

10. The method according to any one of claims 1 - 9, wherein the determination of the set of mobile assets, route assignments and charging assignments takes into account optimizing battery cycling of the mobile electric battery packs in the system.

11. The method according to any one of claims 1 - 8, wherein the method further comprises transmitting instructions to a vehicle or to the driver thereof to transport at least one of the non-self-propelled vehicle assets to another geographic position.

12. The method according to any one of claims 1 - 9, wherein electricity information including price and/or originating energy source is received for at least some of the charging stations and batteries containing energy, and wherein charging assignments are based on overall system parameters of total emissions and/or energy price for the system, route assignment, freight assignment or a combination thereof.

13. A system (8) of managing energy flow and freight transportation within a system including a plurality of mobile electric assets (1), the system (8) comprising a control unit configured to:
▪ Receive mobile electric asset information including a geographic position and a battery status of a plurality of mobile electric assets (1) each having at least one mobile electric asset battery pack (4), wherein the mobile electric assets (1) include both self-propelled vehicle assets (5) and non-self-propelled vehicle assets, and wherein electricity can be transferred directly between the self-propelled vehicle assets (5) and non-self-propelled vehicle assets,
▪ Receive a plurality of freight transport assignments including at least the following criteria for each: a pick-up point, a pick-up time, a drop-off point, a drop-off time and a weight and/or volume,
▪ Determine an electric energy requirement for fulfilling each received freight transport assignment,
▪ Determine a set of mobile electric assets (1), route assignments and charging assignments for those mobile electric assets (1) which meet both the determined electric energy requirement and the criteria of the received freight transport assignment, and
▪ Send route assignments and charging assignments for the determined set of mobile electric assets (1) for fulfilling the freight transport assignments.

14. The system according to claim 13, wherein the control unit is further configured to receive mobile electric asset information in real time.

15. The system according to claim 13 or 14, further comprising a database comprising geographic road route information.
